# EUROPÄISCHE PATENTSCHRIFT

(11) **EP 0 911 615 B1**
(45) Veröffentlichungstag und Bekanntmachung des Hinweises auf die Patenterteilung: **14.08.2002**
(21) Anmeldenummer: 98119749.4
(22) Anmeldetag: 22.10.1998
(51) Int. Cl.: G01F 11/02

(54) **Volumetrisches Dosiergerät**
Volumetric dosing device
Appareil de dosage volumétrique

(30) Priorität: 22.10.1997 IT MI970751 U
(43) Veröffentlichungstag der Anmeldung: 28.04.1999
(73) Patentinhaber: Tenco s.n.c., 16030 Avegno (IT); Wein, Günther, D-74357 Bönnigheim (DE)
(72) Erfinder: Tenco, Giuseppe, 16030 Avegno (GE) (IT); Wein, Günther, 74357 Bönnigheim (DE)
(74) Vertreter: Heumann, Christian, Dipl.-Ing.

(56) Entgegenhaltungen:
- CH-A- 684 850
- DE-B- 1 498 473
- FR-A- 2 227 772

## Beschreibung

Die Erfindung bezieht sich auf ein volumetrisches Dosiergerät zum Dosieren von Fluiden, insbesondere Flüssigkeiten.

Die bekannten Volumendosiergeräte bestehen grundsätzlich aus einer Hohlkammer und einem pneumatischen Zylinder, der einen Dichtungskolben innerhalb dieser Hohlkammer bewegt. Der unterschiedliche Hub des Kolbens innerhalb der Hohlkammer ermöglicht es, die gewünschte Dosierung einzustellen. Durch das Vorschieben und Zurückziehen des Dichtungskolbens wird Druck oder Unterdruck erzeugt, wodurch die Hohlkammer gefüllt oder entleert werden kann. Bei den bekannten Geräten kann man grundsätzlich zwischen zwei verschiedenen Funktionsweisen unterscheiden:

Bei der ersten Art der bekannten Geräte wird der Hub des Dichtungskolbens, der an der Kolbenstange eines pneumatischen Zylinders innerhalb der Hohlkammer befestigt ist, von einem Blockiermechanismus angehalten, der direkt an der Kolbenstange des Zylinders angreift, der sich am Ende des Zylinders gegenüber der Hohlkammer befindet, um das gewünschte Volumen zu erreichen. Der Blockiermechanismus besteht grundsätzlich aus einer Gewindespindel oder einem Gewinderohr.

Bei der zweiten Art der bekannten Geräte wird der Hub des Kolbens, der am pneumatischen Zylinder innerhalb der Hohlkammer befestigt ist, in der Ansaugphase durch einen Blockiermechanismus angehalten, der an der Kolbenstange des Zylinders angreift, der sich am Ende des Zylinders gegenüber der Hohlkammer befindet. Der Blockiermechanismus besteht grundsätzlich aus einer Gewindespindel oder einem Anschlag, der mit einem luftdichten System ausgestattet ist. Die Gesamtlänge des Geräts entspricht der Summe der Länge der Hohlkammer, der Länge des pneumatischen Zylinders, welche mindestens jener der Hohlkammer entspricht, und der Länge des zum Einbau des Blockiermechanismus innerhalb der Hohlkammer nötigen Spielraums, der bei maximaler Ansaugung mindestens der Länge der Hohlkammer entsprechen muß.

Beide Lösungen weisen Nachteile auf. Zunächst sind die Geräte aufgrund ihrer Gesamtlänge sehr platzraubend und sperrig. Ferner ist die Regelung der Produktmenge und somit die Bewegung des Blockiermechanismus, welcher sie steuert, sehr schwierig und in manchen Fällen sogar unmöglich; z.B. wenn man den Ansaugweg verringern will, weil der Druck des pneumatischen Zylinders gegen den Blockiermechanismus beträchtlichen Widerstand leistet. Es ist folglich nötig, die Druckluft auszuschließen, die das gesamte System versorgt, oder das Gerät mit Ventilen zu versorgen, die imstande sind, die Druckluft während dieses Vorgangs abzulassen. Oder aber es müssen andere Maßnahmen getroffen werden, um den Widerstand zwischen dem pneumatischen Zylinder und der Einstellvorrichtung zu verringern. Aufgrund der Platzprobleme zwingen die bekannten Geräte die Hersteller dazu, die gesamte pneumatische Anlage, welche das Gerät versorgt (Ventile, Schalter etc.) in externen Röhrensäulen oder Verkleidungen unterzubringen.

Ein volumetrisches Dosiergerät, welches die Merkmale des Oberbegriffs von Anspruch 1 aufweist, ist aus der Patentschrift FR-A-2 227 772 bekannt.

Aufgabe der vorliegenden Erfindung ist es, die oben genannten Nachteile der bekannten Geräte zu vermeiden.

Ferner ist es Aufgabe der Erfindung, ein volumetrisches Dosiergerät zu entwickeln, das kleiner als die bekannten Geräte ist.

Ferner ist es Aufgabe der Erfindung, ein volumetrisches Dosiergerät zu schaffen, bei dem die Dosierung der Fluidmenge einfach und schnell erfolgt.

Diese Aufgaben werden durch die Merkmale der Patentansprüche 1 bis 4 gelöst. Der wesentliche Gedanke der Erfindung besteht also darin, daß der Innendurchmesser des Füllzylinders größer als der Außendurchmesser des Arbeitszylinder ist, und daß der Arbeitszylinder derart in den Füllzylinder verschiebbar ist, daß er sich zum Teil innerhalb des Füllzylinders befindet. Durch diese Maßnahme wird eine verkürzte Bauweise der gesamten Vorrichtung erreicht, die sich im wesentlichen aus der Länge des Füllzylinders und des Arbeitszylinders zusammensetzt. Darüber hinaus entfällt ein Blockiermechanismus. Die Dosiermenge kann exakt eingestellt werden.

Ein Ausführungsbeispiel der Erfindung ist in der Zeichnung dargestellt und wird im folgenden näher beschrieben. Es zeigen
- Fig. 1: eine perspektivische Ansicht des Dosiergerätes,
- Fig. 2: einen Längsschnitt durch das Dosiergerät bei maximalem Ansaugvolumen und
- Fig. 3: einen Längsschnitt durch das Dosiergerät bei minimalem Ansaugvolumen.

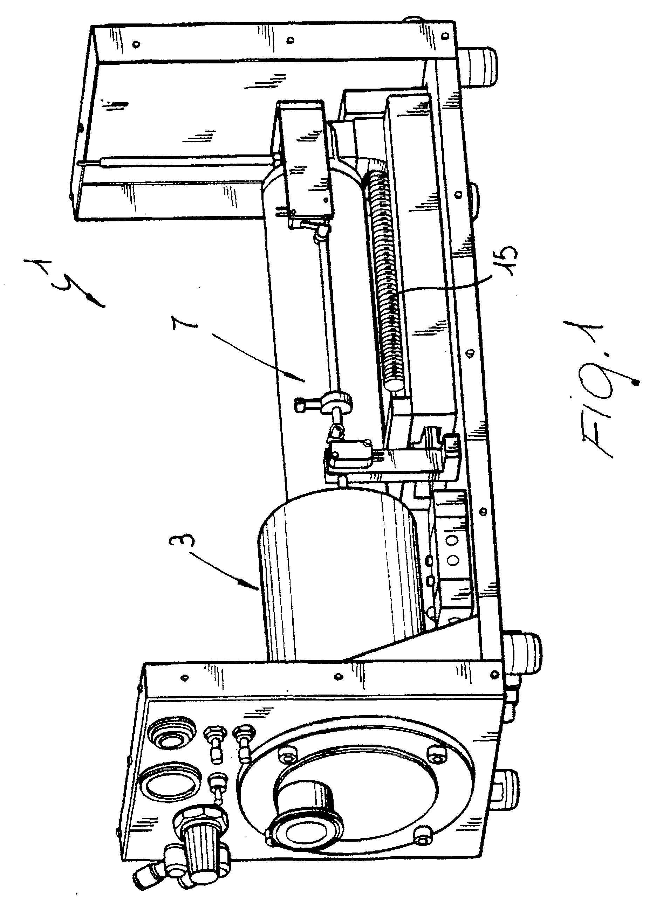

Fig. 1 zeigt ein Dosiergerät 1 in perspektivischer Darstellung, bei welchem Teile der Verkleidung abgenommen sind, so daß die wesentlichen Teile dieses Geräts wie ein Füllzylinder 3, ein Arbeitszylinder 7 und eine Gewindespindel 15 erkennbar sind.

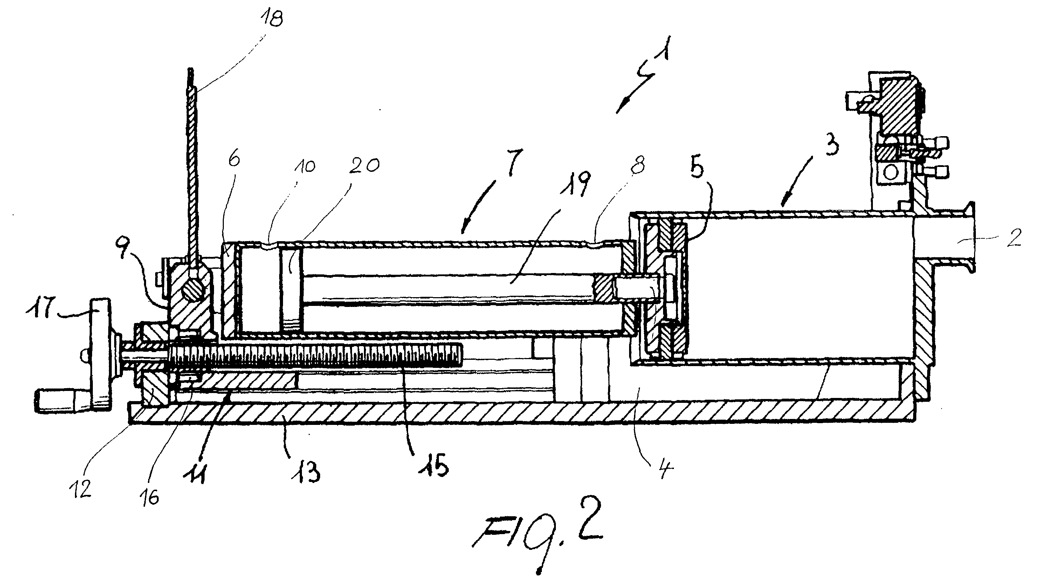

Fig. 2 zeigt in einem Längsschnitt das Dosiergerät 1, welches einen Füllzylinder 3 mit einem stirnseitigen Anschlußstutzen 2 aufweist. Der Füllzylinder 3 ist auf einer Grundplatte 13 befestigt und an seiner dem Anschlußstutzen 2 gegenüberliegenden Stirnseite offen. In dem Füllzylinder 3 ist ein längsbeweglicher Dichtkolben 5 angeordnet, der mit dem Ende 4 eines Arbeitszylinders 7 verbunden ist. Dieses Ende 4 ist Teil einer Kolbenstange 19, die an ihrem anderen Ende einen Kolben 20 trägt. Der Arbeitszylinder 7 weist Öffnungen 8 und 10 zum Eintritt bzw. Austritt eines Arbeitsmediums, z.B. Druckluft auf. Er ist insofern als pneumatischer Arbeitszylinder ausgebildet. Das in der Zeichnung links dargestellte Ende 6 des Arbeitszylinders 7 ist an einer Gleitvorrichtung 9 befestigt. Diese Gleitvorrichtung ist als Schlitten ausgebildet und auf Führungsschienen 11 längsbeweglich, d.h. parallel zur Richtung der Kolbenstange 19 bzw. der Längsachse von Füll- und Arbeitszylinder. Die Gleitvorrichtung 9 wird durch eine Gewindespindel 15, welche über ein Handrad 17 gedreht wird, verstellt. Dazu ist in der Gleitvorrichtung 9 eine Gewindemutter 16 befestigt, die die Gewindespindel 15 aufnimmt. Letztere ist über ein Lagerböckchen 12 drehbeweglich gelagert und gegenüber der Grundplatte 13 abgestützt. Bei Drehung des Handrades 17 wird die Gleitvorrichtung 9 somit in Längsrichtung verschoben, damit wird auch der an der Gleitvorrichtung 9 befestigte Arbeitszylinder 7 in seiner Längsrichtung verschoben, und damit wird auch der Ausgangspunkt der Bewegung des Kolbens 20 bzw. der Kolbenstange 19 verändert. Durch diese Positionierung wird auch der Dichtkolben 5 im Füllzylinder hinsichtlich seiner Ausgangsposition verändert, so daß damit das Ansaug- bzw. Dosiervolumen geändert werden kann. Wie eingangs erwähnt, zeigt Fig. 2 die Einstellung des Dosiergerätes für maximales Ansaugvolumen, d.h. der Kolben 5 befindet sich nach dem Ansaugtakt am äußersten Ende des Füllzylinders 3. Da der Füllzylinder 3 nur einen Anschlußstutzen 2 aufweist, wird das zu dosierende Fluid durch diesen Anschlußstutzen 2 angesaugt und wieder hinausgedrückt. Hierfür ist außerhalb des Füllzylinders 3 ein nicht dargestelltes Ventil vorgesehen, welches das Ansaugen und das Ausdrücken steuert.

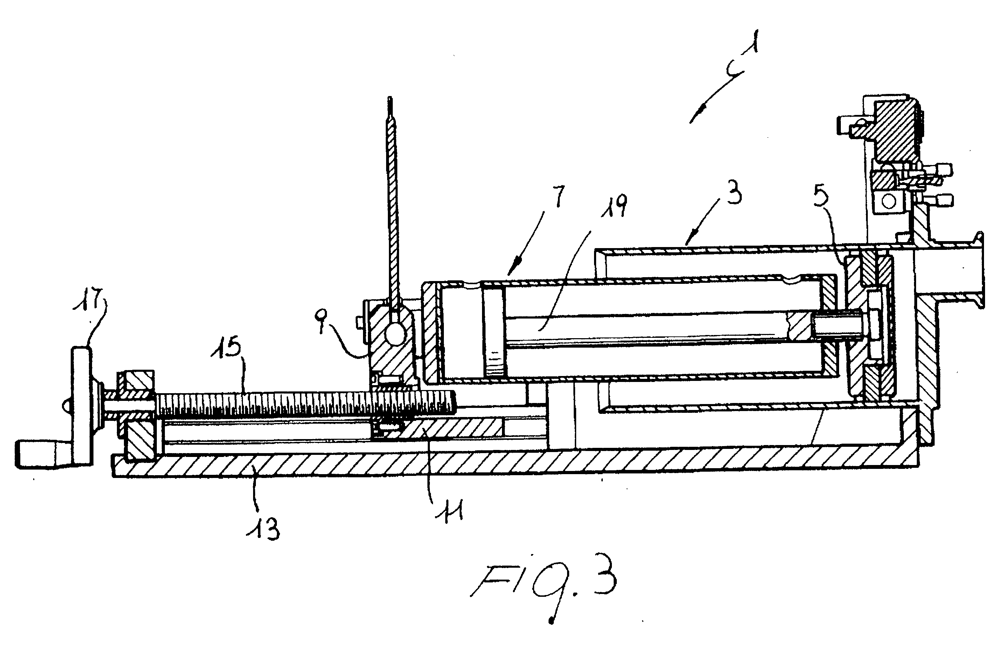

Fig. 3 zeigt die andere Extremlage für den Kolben 5, nämlich bei minimalem Ansaugvolumen bzw. minimaler Dosiermenge. Hierzu ist die Gleitvorrichtung 9 durch Drehen der Spindel 15 mittels des Handrades 17 in eine Stellung nach rechts verschoben worden, so daß der Arbeitszylinder 7 sich zum Teil innerhalb des Füllzylinders 3 befindet.

An der Gleitvorrichtung 9 ist eine Anzeigevorrichtung 18 befestigt, die die Form eines Stiftes aufweist, der mit seiner Spitze aus der nicht dargestellten Gehäuseverkleidung herausragt und somit den jeweils eingestellten Füllungsgrad für das Dosiergerät anzeigt.

## Patentansprüche

1. Volumetrisches Dosiergerät zum Dosieren von Fluiden, insbesondere Flüssigkeit bestehend aus
- einem Füllzylinder (3) zum Ansaugen des zu dosierenden Fluids,
- einem innerhalb des Füllzylinders (3) beweglichen Kolben(5),
- einem Arbeitszylinder (7), dessen erstes Ende (4) mit dem beweglichen Kolben (5) und dessen zweites Ende (6) mit
- einer längsverschieblichen Gleitvorrichtung (9) verbunden sind,
- wobei die Position der Gleitvorrichtung (9) mittels einer Einstellvorrichtung (15, 16, 12, 17) und Längsführungen (11) einstellbar ist,
- daß der Füllzylinder (3), die Einstellvorrichtung (12, 15), die Gleitvorrichtung (9) und die Längsführungen (11) auf einer Grundplatte (13) befestigt sind, **dadurch gekennzeichnet, daß**
- der Innendurchmesser des Füllzylinders (3) größer als der Außendurchmesser des Arbeitszylinders (7) ist,
- und daß der Arbeitszylinder (7) derart in den Füllzylinder (3) verschiebbar ist, daß er sich zum Teil innerhalb des Füllzylinders (3) befindet.

2. Dosiergerät nach Anspruch 1, **dadurch gekennzeichnet, daß** der Arbeitszylinder (7) als pneumatischer Zylinder ausgebildet ist, mit einem Arbeitskolben (20) und einer Kolbenstange (19), deren aus dem Zylinder (7) herausragendes Ende (4) mit dem beweglichen Kolben (5) verbunden ist.

3. Dosiergerät nach Anspruch 1 oder 2, **dadurch gekennzeichnet, daß** die Einstellvorrichtung eine über ein Handrad (17) betätigte Gewindespindel (15) aufweist, welche einerseits über ein Lager (12) gegenüber der Grundplatte (13) abgestützt und andererseits in einer mit der Gleitvorrichtung (9) befestigten Gewindemutter (16) aufgenommen ist.

4. Dosiergerät nach einem der vorhergehenden Ansprüche, **dadurch gekennzeichnet, daß** an der Gleitvorrichtung (9) eine Anzeigevorrichtung (18) für den Füllungsgrad des Füllzylinders (3) befestigt ist.

## Claims

1. A volumetric feeder for metering of fluids especially liquids comprising
- a filling cylinder (3) for aspiration of the fluid to be metered,
- a plunger (5) movable within the filling cylinder (3),
- a working cylinder (7), the first end of which (4) is connected to the movable plunger (5) and the second end (6) of which is connected to
- a sliding mechanism (9) which can be shifted longitudinally,
- with the position of the sliding mechanism (9) being adjustable by means of an adjustment device (15, 16, 12, 17) and longitudinal guides (11),
- that the filling cylinder (3), the adjustment device (12, 15), the sliding mechanism (9) and the longitudinal guides (11) are fastened to a base plate (13) **characterized in that**
- the inside diameter of the filling cylinder (3) is greater than the outside diameter of the working cylinder (7),
- and that the working cylinder (7) can be shifted into the filling cylinder (3) such that it is partly located within the filling cylinder (3).

2. The feeder according to claim 1, **characterized in that** the working cylinder (7) is designed as a pneumatic cylinder with a working plunger (20) and a plunger rod (19), the end (4) of which protruding from the cylinder (7) is connected to the movable plunger (5).

3. The feeder according to claim 1 or 2, **characterized in that** the adjustment device possesses a threaded spindle (15) to be actuated via a handwheel (17), the spindle being on the one hand supported towards the base plate (13) via a bearing (12) and on the other hand held by a threaded nut (16) fastened to the sliding mechanism (9).

4. The feeder according to any preceding claim, **characterized in that** a display (18) for the filling degree of the filling cylinder (3) is fastened to the sliding mechanism (9).

## Revendications

1. Doseur volumétrique pour le dosage des fluides surtout des liquides comprenant
- un cylindre de remplissage (3) pour l'aspiration du fluide à doser
- un piston plongeur mobile (5) dans le cylindre de remplissage (3)
- un cylindre de travail (7) dont le premier bout (4) est lié au piston plongeur mobile (5) et dont le deuxième bout (6) est lié à
- un dispositif de glissement (9) déplaçable longitudinalement,
- avec la position du dispositif de glissement (9) étant réglable à l'aide d'un dispositif de d'ajustage (15, 16, 12, 17) et des moyens de guidages longitudinaux (11),
- que le cylindre de remplissage (3), le dispositif d'ajustage (12, 15), le dispositif de glissement (9) et les moyens de guidages longitudinaux (11) sont fixés à une plaque de fondation (13), **caractérisé en ce que**
- le diamètre intérieur du cylindre de remplissage (3) est plus grand que le diamètre extérieur du cylindre de travail (7),
- et que le cylindre de travail (7) est déplaçable dans le cylindre de remplissage (3) tel qu'il se trouve partiellement à l'intérieur du cylindre de remplissage (3).

2. Doseur selon la revendication 1, **caractérisé en ce que** le cylindre de travail (7) est construit comme un cylindre pneumatique, avec un piston plongeur de travail (20) et une tige de piston plongeur (19) dont le bout (4) débordant du cylindre (7) est lié au piston plongeur mobile (5).

3. Doseur selon la revendication 1 ou 2, **caractérisé en ce que** le dispositif d'ajustage possède une broche filetée (15) commandée par une roue à main (17) qui d'une part est supporté contre la plaque de fondation (13) par un palier (12) et d'autre part est saisie dans un écrou fileté (16) fixé au dispositif de glissement (9).

4. Doseur selon une revendication précédente, **caractérisé en ce qu'**un indicateur (18) pour le taux de remplissage du cylindre de remplissage (3) est fixé au dispositif de glissement (9).
